# EUROPÄISCHE PATENTSCHRIFT

(11) **EP 3 529 600 B1**
(45) Veröffentlichungstag und Bekanntmachung des Hinweises auf die Patenterteilung: **04.12.2024**
(21) Anmeldenummer: 16788472.5
(22) Anmeldetag: 20.10.2016
(51) Int. Cl.: G01N 23/046, H05G 1/26

(54) **VERFAHREN ZUR ÜBERWACHUNG DES FUNKTIONSZUSTANDS EINER ANLAGE ZUR COMPUTERTOMOGRAPHISCHEN UNTERSUCHUNG VON WERKSTÜCKEN**
METHOD FOR MONITORING THE FUNCTIONAL STATE OF A SYSTEM FOR COMPUTER-TOMOGRAPHIC EXAMINATION OF WORKPIECES
PROCÉDÉ POUR SURVEILLER L'ÉTAT FONCTIONNEL D'UNE INSTALLATION DESTINÉE À ANALYSER DES PIÈCES PAR TOMODENSITOMÉTRIE

(43) Veröffentlichungstag der Anmeldung: 28.08.2019
(73) Patentinhaber: Volume Graphics GmbH, 69115 Heidelberg (DE); Physikalisch-technische Bundesanstalt, 38116 Braunschweig (DE)
(72) Erfinder: SCHÖNFELD, Torsten, 38106 Braunschweig (DE); BARTSCHER, Markus, 31234 Edemissen (DE); GÜNTHER, Thomas, 69115 Heidelberg (DE); POLIWODA, Christoph, 69115 Heidelberg (DE); REINHART, Christof, 69115 Heidelberg (DE)
(74) Vertreter: Patentanwälte Olbricht Buchhold Keulertz
(86) Internationale Anmeldenummer: PCT/EP2016/075278
(87) Internationale Veröffentlichungsnummer: WO 2018/072834

(56) Entgegenhaltungen:
- DE-A1- 102006 048 608
- US-A1- 2007 036 264

## Beschreibung

Die Erfindung betrifft ein Verfahren zur Überwachung des Funktionszustands einer Anlage zur computertomographischen Untersuchung von Werkstücken nach Anspruch 1, sowie eine entsprechende Vorrichtung nach Anspruch 14 und ein Computerprogrammprodukt nach Anspruch 15.

Computertomographische Untersuchungen werden neben den bekannten medizinischen Anwendungen zunehmend auch zur Qualitätssicherung und Materialprüfung in der Fertigung von Werkstücken eingesetzt. Auf diese Weise können insbesondere auch zerstörungsfreie Untersuchungen der inneren oder schwer zugänglichen Bereiche eines Werkstücks sowie dimensionelle Messungen an dem Werkstück erfolgen. Dabei muss jedoch stets gewährleistet sein, dass die durch den verwendeten Computertomographen erzeugten Aufnahmen bzw. Abbildungen auch tatsächlich die Realität mit einer ausreichenden Genauigkeit wiedergeben. So kann es beispielsweise aufgrund von Verschleißerscheinungen oder Defekten an der Anlage zu einem allmählichen oder kurzfristigen Abfall der Qualität der Aufnahmen kommen. Daher ist die Überwachung des korrekten Funktionszustandes des Computertomographen zur Sicherung der Aussagekraft der gesammelten Daten notwendig.

Es existieren bislang diverse Ansätze zur Überwachung von computertomographischen Untersuchungen an Werkstücken. Ein erster Ansatz sieht die Verwendung von Maßverkörperungen vor. Dabei wird anhand eines kalibrierten Prüfkörpers ein Referenzwert für ein bestimmtes Maß ermittelt, welches dann bei fortlaufend wiederholten Messungen des Prüfkörpers gegen ermittelte Messwerte verglichen wird. Nachteilig ist hierbei jedoch, dass es für viele zu untersuchende Geometrien und Aufbauten nicht möglich oder nicht wirtschaftlich ist, eine messtechnisch entsprechende kalibrierte Maßverkörperung zu erstellen. Daher entsprechen die durch eine Maßverkörperung festgelegten Messgrößen oftmals nicht denjenigen Messgrößen, welche bei der Beurteilung der Fertigungsqualität eines untersuchten Objekts relevant sind. Falls dieser erste Überwachungsansatz mit einem kalibrierten Werkstück durchgeführt wird, so beschränkt sich das Verfahren in der Regel auf von außen zugängliche Geometrien, da nur diese durch Messtechnik von außen kalibrierfähig sind. Innere Geometrien durch Zerteilung und Kalibrierung der Einzelteile zu erfassen und danach den Körper im wieder zusammengesetzten Zustand für die Überwachung zu benutzen, führt in der Realität zu mannigfaltigen Problemen. Es kann hier beispielsweise zu Abweichungen durch Verformung des Werkstücks durch die Zerteilung, zu Abweichungen durch den Materialverlust beim Zerteilen und zu Abweichungen durch die häufig erforderliche Registrierung der Einzelteile zu einer Gesamtgeometrie kommen.

Ferner muss für jede Überwachung der Anlage mit einer Maßverkörperung der laufende Messbetrieb unterbrochen werden, sodass die Nutzungseffizienz der Anlage nicht optimal ist. Dabei muss üblicherweise die Überwachung der Anlage mit einer Maßverkörperung in regelmäßigen zeitlichen Intervallen wiederholt werden, um eine ausreichende Absicherung der mit der Anlage ermittelten Messwerte zu erreichen. Insbesondere wenn die zulässigen Toleranzen bei Messungen mit Hilfe der Anlage sehr gering sind, kann eine zeitlich sehr engmaschige Überwachung mittels Maßverkörperungen notwendig werden. Somit kann gerade bei sehr genauen Messungen mit geringen Fehlertoleranzen eine häufige Unterbrechung des Messbetriebs entstehen, wodurch die Nutzungseffizienz der Anlage stark eingeschränkt wird.

Bei einem zweiten Ansatz findet eine Überwachung von Betriebsparametern der verwendeten Anlage statt. Betriebsparameter können beispielsweise elektrische Betriebsparameter (Spannung oder Strom der Röntgenröhre) oder mechanische Parameter, wie beispielsweise das Erreichen von Sollpositionen und Abweichungen davon sein. Es können aber auch automatisierte Prüfungen einfacher Bildparameter vorgenommen werden. Nachteilig ist hierbei unter anderem, dass diese Überwachung nicht sehr spezifisch ist. Daher wird möglicherweise zu früh oder zu spät vor einer Fehlfunktion der Anlage gewarnt.

So beschreibt DE 10 2006 048 608 A1 z. B. ein Verfahren zur Kontrolle eines Leistungszustandes eines Röntgenstrahlers und/oder eines Röntgendetektors, wobei wenigstens für den Röntgenstrahler ein Satz von vorgebbaren Testparametern gewählt wird, wobei von dem Röntgenstrahler ausgehende Röntgenstrahlen wenigstens auf einen Teilbereich des Röntgendetektors treffen und von dem Röntgendetektor detektiert werden, wobei wenigstens eine den Röntgenstrahler kennzeichnende Kenngröße und/oder wenigstens eine den Röntgendetektor kennzeichnende Kenngröße erfasst wird. Die wenigstens eine erfasst Kenngröße wird mi einer der erfassten Kenngröße entsprechende Referenz-Kenngröße verglichen, wobei eine Abweichung der erfassten Kenngröße von der Referenz-Kenngröße als Maß für den Leistungszustand des Röntgenstrahlers und/oder des Röntgendetektors verwendet wird.

Weiter ist aus US 2007/0036264 A1 ein Verfahren zur Röntgenbildgebung eines Körpers unter Verwendung eines Trägers zur Aufnahme eines zu untersuchenden Körpers, einer einen Röntgenstrahl aussendenden Quelle, eines vom Röntgenstrahl bestrahlten Detektors, eines Bildwandlers zur Umwandlung der erfassten Intensitäten in Daten, ein Mittel zum Drehen des montierten mobilen Trägers um einen Drehwinkel um eine Drehachse in Bezug auf die Quelle und den Detektor und einen geeignet programmierten Computer, um die für ein Paar orthogonaler Drehwinkel erfassten Daten zu mitteln, um n Spalten- und m Linienmittelwerte für zu erhalten von n und m Elementarsegmenten eines Bandes des Detektors, um ein Anfangsbild (n, m) mit den n Spalten- und m Linienmittelwerten zu konstruieren, um den Dämpfungskoeffizienten in jeder n × m Elementarzone durch ein Verfahren der kleinsten Quadrate einzustellen unter Berücksichtigung der von n Spalten- und m Linienmittelwerte, die als Randbedingungen angesehen werden, um die vorherigen Stufen für Daten zu wiederholen, die mit verschiedenen Paaren von vorzugsweise orthogonalen Drehwinkeln erfasst wurden, und um die eingestellten Bilder Term für Term zu mitteln, um zu einem Synthesebild zu gelangen, das Schwächungskoeffizienten des untersuchten Körpers ausdrückt.

Schließlich findet häufig auch eine implizite Überwachung von Aufnahmen durch Sichtung und Bewertung der Aufnahmeergebnisse durch einen menschlichen Anwender oder Experten statt. Verbreitet wird dabei visuell die "Schärfe" von Schnittbildern oder die Gestalt von Oberflächen betrachtet. Allerdings findet diese Überwachung nur punktuell bzw. lokal statt, da es sehr zeitaufwändig ist, komplette CT-Aufnahmen so zu bewerten. Die Güte dieser Überwachung hängt zudem stark von der Kompetenz und dem Vorwissen des Experten ab und weist natürliche Schwankungen auf - z.B. durch Überlastung, Ermüdung oder einfach Zeitmangel.

Der vorliegenden Erfindung liegt demgegenüber die Aufgabe zugrunde, ein verbessertes Verfahren zur Überwachung des Funktionszustands einer Anlage zur computertomographischen Untersuchung von Werkstücken bereitzustellen, welches die zuvor genannten Nachteile des Standes der Technik überwindet.

Hauptmerkmale der Erfindung sind in Anspruch 1, sowie in den Ansprüchen 14 und 15 angegeben. Ausgestaltungen sind Gegenstand der Ansprüche 2 bis 13.

In einem ersten Aspekt betrifft die Erfindung ein computer-implementiertes Verfahren zur Überwachung des Funktionszustands einer Anlage zur computertomographischen Untersuchung von Werkstücken. Eine computertomographische Untersuchung eines Werkstücks mittels der Anlage umfasst dabei das Durchführen einer oder mehrerer computertomographischer Messungen an dem Werkstück, wobei die von der Anlage durchgeführten computertomographischer Messungen jeweils wenigstens einen Messwert für wenigstens eine Messgröße ergeben. Das Verfahren zur Überwachung des Funktionszustands weist dabei zunächst das Auswählen von Messwerten für wenigstens eine Messgröße aus wenigstens zwei computertomographischen Messungen an einem oder mehreren Werkstücken auf. Dann wird wenigstens ein Streumaß für die ausgewählten Messwerte der wenigstens einen Messgröße und wenigstens ein Referenzstreumaß für Messwerte der wenigstens einen Messgröße ermittelt. Der Funktionszustands der Anlage wird dann durch Vergleichen des wenigstens einen ermittelten Streumaßes mit dem wenigstens einen Referenzstreumaß für die wenigstens eine Messgröße ermittelt. Das Streumaß weist eine Information über die Verteilung der Messwerte auf. Messdaten werden dabei aus wenigstens einer computertomographischen Aufnahme bzw. Abbildung eines tomographierten Werkstücks erhalten. Es ist somit durchaus möglich, dass ein durch eine computertomographische Aufnahme erhaltener Datensatz für ein untersuchtes Werkstück mehrfach ausgewertet wird, sodass für eine oder mehrere Messgrößen ein oder mehrere Messwerte aus einem einzigen Datensatz ermittelt werden. Eine Mehrzahl von Messungen bedeutet somit nicht zwingend auch eine Mehrzahl von Aufnahmen durch die computertomographische Anlage.

Unter einer "Messgröße" kann dabei eine bestimmte dimensionell messbare bzw. im Rahmen einer zerstörungsfreien Prüfung zu messende, dimensionelle Eigenschaft eines Werkstücks verstanden werden. Beispielsweise kann es sich bei einer Messgröße um die Lage (Position) einer Kante in dem Werkstück, dem Durchmesser einer Bohrung, der Dichte und/oder Größe und/oder Lage von Poren in einem Werkstück oder ähnliches handeln. Eine Messgröße muss jedoch nicht zwingend eine dimensionelle Eigenschaft eines Werkstücks sein. Vielmehr kann es sich bei einer Messgröße auch um eine Größe handeln, welche nicht aus der durch eine Aufnahme erzeugten Abbildung des Werkstücks ermittelt wird, sondern aus dem Bild der Aufnahme an sich. Beispielsweise können Messwerte zu einer solchen Messgröße auch aus einem im Zuge einer Aufnahme erzeugten Projektionsbild oder aus den rekonstruierten Volumendaten im Umfeld der vermuteten Objektoberfläche ermittelt werden. Beispiele für derartige Messgrößen wären Grauwertverteilungen oder Rauschwerte in definierten Bereichen eines Projektionsbilds oder des rekonstruierten Volumens.

Die Verwendung von Messgrößen, welche aus den bei einer Aufnahme erzeugten Projektionsbildern abgeleitet werden, hat dabei den Vorteil, dass die Rohdaten der Aufnahme zur Beurteilung des Anlagenzustands herangezogen werden können. Demgegenüber verlangen dimensionelle Messgrößen der Werkstücke zunächst eine Rekonstruktion des untersuchten Werkstücks durch Rückprojektion der Projektionsdaten. Dabei werden üblicherweise Filter eingesetzt um ein möglichst scharfes Bild zu erhalten. Hierdurch gehen jedoch Informationen verloren, welche zur Beurteilung des Funktionszustands der verwendeten computertomographischen Anlage nützlich sein können.

Die Messgrößen werden anhand einer computertomographischen Untersuchung für ein Werkstück bewertet, sodass ein oder mehrere Zahlenwerte als Messwert erhalten werden. Somit kann ein Messwert beispielsweise ein Längenmaß, eine Dichte, oder ein anderer Wert sein, welcher nicht das Werkstück an sich, sondern das aufgenommene Bild charakterisiert. Bei einer Messgröße muss es sich jedoch nicht zwingend nur um eine direkt messbare Größe, wie eine Kantenlänge handeln. Vielmehr kann eine Messgröße auch eine abgeleitete Größe sein, wie beispielsweise eine mittlere Oberflächenqualität in einem bestimmten Bereich eines untersuchten Werkstücks. Bei einer Messgröße kann es sich auch um einen Grauwert in einem bestimmten Bereich, oder um ein Signal-Rausch-Verhältnis einer Aufnahme handeln. Generell können hier aus im Zuge der Messungen ermittelten Messwerten auch Messgrößen abgeleitet werden, welche einen Vergleich von Messungen miteinander erlauben.

Erfindungsgemäß wird aus den Messwerten aus wenigstens zwei Messungen an einem oder mehreren Werkstücken wenigstens ein Streumaß für die Messwerte zu der betrachteten Messgröße ermittelt. Bei einem Streumaß handelt es sich um ein Maß, welches eine Information über die Verteilung der Messwerte enthält. So kann es sich bei dem Streumaß beispielsweise um eine Varianz, ein Intervall oder eine Standardabweichung der Messwerte handeln.

Das Streumaß gibt eine Kenngröße an, mit der eine Bestimmung des Funktionszustands der Anlage möglich wird.

Das so ermittelte Streumaß wird dann im weiteren Verfahrensablauf mit einem Referenzstreumaß verglichen um den Funktionszustand der Anlage zu ermitteln. Das Referenzstreumaß kann dabei beispielsweise aus einer Datenbank abgerufen werden. Wie bei dem zuvor beschriebenen Streumaß kann es sich auch bei dem Referenzstreumaß um ein Maß handeln, welches eine Statistik bzw. Verteilung von Messwerten darstellt. Es muss sich jedoch bei dem Referenzstreumaß nicht zwingend um dieselbe Art von Streumaß handeln, wie bei dem aus den Messwerten bestimmten Streumaß.

Die Verwendung von statistischen Größen zur Bestimmung des Anlagenzustands hat dabei den Vorteil, dass Schwankungen aufgrund von Fertigungstoleranzen der Werkstücke bei der Beurteilung der Funktionsfähigkeit des verwendeten Computertomographen keinen bzw. nur einen sehr geringen Einfluss auf das Ergebnis der Beurteilung des Funktionszustands der Anlage haben.

Die einzelnen Verfahrensschritte müssen dabei nicht zwingend in der zuvor beschriebenen Reihenfolge abgearbeitet werden. Vielmehr ist auch eine andere Reihenfolge, sofern logisch sinnvoll, durchaus möglich.

Der Funktionszustand der Anlage kann dabei nach einer Ausführungsform ermittelt werden, indem ein Unterschied zwischen dem wenigstens einen ermittelten Streumaß und dem wenigstens einen Referenzstreumaß ermittelt wird und der ermittelte Unterschied mit wenigstens einem zulässigen Wertebereich für den Unterschied verglichen wird. Liegt dabei der Unterschied außerhalb des wenigstens einen zulässigen Wertebereichs, wird eine Information ausgegeben, wobei die Information anzeigt, dass der ermittelte Unterschied außerhalb wenigstens eines zulässigen Wertebereichs liegt.

Unter einem "Unterschied" zwischen einem Streumaß und einem Referenzstreumaß kann dabei neben beispielsweise einer Differenz der beiden Werte auch eine prozentuale Abweichung oder Ähnliches verstanden werden. Beispielsweise kann ein Unterschied auch ermittelt werden, indem geprüft wird, wie sehr sich ein durch das Streumaß definiertes Intervall mit einem durch das Referenzstreumaß definierten Intervall deckt, also wie groß die Schnittmenge ist. Liegt dabei der ermittelte Unterschied außerhalb wenigstens eines zulässigen Wertebereichs, wird eine Information ausgegeben. Dabei kann die Information sowohl von dem Computertomographen selbst, beispielsweise in Form eines optischen oder akustischen Warnsignals ausgegeben werden, oder die Information wird in digitaler Form im Sinne eine Signals an ein Peripheriegerät weitergegeben und dort verarbeitet. Beispielsweise kann die Information bei Weitergabe an ein Peripheriegerät dazu führen, dass ein Logfile erstellt wird, in dem die ermittelten Abweichungen bzw. Unterschiede notiert werden. Ein solches Logfile könnte dann beispielsweise genutzt werden, um Wartungen des Computertomographen zu planen.

Dabei ist zu beachten, dass erfindungsgemäß auch mehrere zulässige Wertebereiche für den ermittelten Unterschied definiert sein können. Beispielsweise könnte so eine Art "Zustandsampel" für den Funktionszustand des Computertomographen realisiert werden. Liegt der ermittelte Unterschied innerhalb eines ersten Wertebereichs, wird davon ausgegangen, dass der Computertomograph sehr gut funktioniert, sodass keinerlei Maßnahmen zu dessen Wartung notwendig sind und den ermittelten Werten uneingeschränkt vertraut werden kann. Liegen die ermittelten Unterschiede außerhalb des ersten Wertebereichs, jedoch noch innerhalb des zweiten Wertebereichs, wird davon ausgegangen, dass der Computertomograph zwar nicht mehr optimal funktioniert, jedoch aktuell noch keine Maßnahmen zu dessen Wartung notwendig sind. Es kann jedoch hier davon ausgegangen werden, dass in absehbarer Zeit eine Wartung notwendig sein wird, sodass ein entsprechender Wartungsplan aufgesetzt wird. Liegt der ermittelte Unterschied hingegen außerhalb des ersten und außerhalb des zweiten Wertebereichs kann davon ausgegangen werden, dass der Computertomograph keine hinreichend genauen Messergebnisse mehr liefert und dass eine Wartung des Computertomographen notwendig ist. Die Information, welche ausgegeben wird, sobald der ermittelte Unterschied außerhalb eines Wertebereichs liegt, beinhaltet dabei auch eine Angabe des Wertebereichs bzw. der Wertebereiche, die verlassen wurden. Die ausgegebene Information kann auch dazu verwendet werden Werkstücke für die weiteren Produktion bzw. Nutzung zu sperren, da die computertomographische Anlage keine valide Messung gewährleistete.

Die ausgegebene Information kann nach einer weiteren Ausführungsform auch dazu genutzt werden, eine Überprüfung der überwachten Anlage mittels einer Maßverkörperung anzustoßen. Durch die Überprüfung mittels einer Maßverkörperung kann dann getestet werden, ob der ermittelte Unterschied der Streumaße, welcher zu der Ausgabe der Information geführt hat, tatsächlich durch eine fehlerhafte computertomographischen Anlage ausgelöst wurde. Es kann nämlich durchaus auch vorkommen, dass die Fertigung der untersuchten Werkstücke systematischen Fehlern unterliegt, beispielsweise hervorgerufen durch eine zu hohe Fertigungstemperatur oder andere fehlerhafte Systemparameter. Auch solche Fehlerquellen können sich schleichend einstellen. Hierdurch würden ebenfalls systematische Abweichungen der Messwerte zu den betrachteten Messgrößen entstehen, welche zu einer Abweichung des letztendlich aus den Messwerten ermittelten Streumaßes von dem Referenzstreumaß führen können. Diese Abweichung könnte dann irrtümlich als auf einer Fehlfunktion der Messeinrichtung beruhend interpretiert werden. Diese fehlerhafte Interpretation kann jedoch durch eine Prüfung mittels einer Maßverkörperung vermieden werden.

Neben der Unterscheidung, ob eine Abweichung der Streumaße durch eine fehlerhafte Fertigung oder eine fehlerhafte Aufnahme hervorgerufen werden, hat die beschriebene Ausführungsform ferner den Vorteil, dass die im Allgemeinen aufwändige Überprüfung mittels einer Maßverkörperung nur dann durchgeführt wird, wenn sich aus der fortlaufenden Auswertung von Messergebnissen hierzu ein konkreter Anlass ableiten lässt. Die zuvor beschriebene regelmäßige Überwachung der Anlage mittels einer Maßverkörperung könnte so zu einer bedarfsgerechten Überwachung modifiziert werden. Effektiv kann so die Zahl der Unterbrechungen des Messbetriebs für eine Kalibrierung mittels einer Maßverkörperung gegenüber eine regelmäßigen Kalibrierung reduziert und letztendlich optimiert werden, sodass effektiv die Nutzungseffizienz der Anlage gesteigert wird.

Alternativ oder zusätzlich zu der Ausgabe einer Information, wie sie zuvor beschrieben wurde, kann nach einer weiteren Ausführungsform das Ermitteln des Funktionszustands der Anlage ferner das Ermitteln eines zeitlichen Verlaufs der ermittelten Streumaße für eine Messgröße aufweisen. Durch einen Vergleich des ermittelten Verlaufs mit dem wenigstens einen Referenzstreumaß wird dann abgeschätzt, wann ein Unterschied zwischen dem Streumaß und dem Referenzstreumaß außerhalb wenigstens eines zulässigen Wertebereichs für den Unterschied liegen wird. Auf diese Weise kann beispielsweise eine Vorhersage getroffen werden, ab welchem Zeitpunkt die Aufnahmen des Computertomographen aufgrund von fortlaufenden Verschleißerscheinungen nicht mehr exakt genug sein werden, um repräsentative Aussagen über die Qualität der untersuchten Werkstücke zu liefern.

Wie zuvor bereits ausgeführt wurde, kann das bei der Ermittlung des Funktionszustands der Anlage verwendete Referenzstreumaß beispielsweise aus einer Datenbank abgerufen werden. Alternativ kann jedoch nach einer Ausführungsform auch vorgesehen sein, dass das wenigstens eine Referenzstreumaß in einer Trainingsphase ermittelt wird. Die Trainingsphase weist dabei zunächst das Auswählen von Referenzmesswerten für wenigstens eine Messgröße aus einer Referenzmessreihe mit einer Mehrzahl von Messungen an einer Mehrzahl von Werkstücken auf. Anschließend wird das wenigstens eine Referenzstreumaß aus den ausgewählten Referenzmesswerten der wenigstens einen Messgröße der Referenzmessreihe ermittelt.

Die Verwendung einer solchen Trainingsphase zur Ermittlung eines oder mehrerer Referenzstreumaße hat dabei den Vorteil, dass zur Ermittlung der Referenzwerte Werkstücke verwendet werden können, welche baugleich mit den Werkstücken sind, die im weiteren Verlauf des Verfahrens analysiert und bewertet werden sollen. So können durch das beschriebene Verfahren sehr aussagekräftige Referenzwerte bzw. Referenzstreumaße ermittelt werden, welche durch Messungen an den Werkstücken gut reproduzierbar und vergleichbar sind. Weiter können zur Ermittlung der Referenzstreumaße durch eine Trainingsphase Messwerte verwendet werden, welche im Zuge der Werkstückprüfung ohnehin ermittelt werden. Es muss somit nicht zwingend eine gesonderte Messreihe aufgenommen werden. Vielmehr können Messwerte aus der laufenden Werkstückprüfung verwendet werden, sodass keine Ausfallzeiten durch eine Überwachung des Funktionszustands der Anlage entstehen.

Dabei ist nach einer weiteren Ausführungsform vorgesehen, dass die Trainingsphase unmittelbar nach einer Instandsetzung und Wiederinbetriebnahme der Anlage zur computertomographischen Untersuchung von Werkstücken durchgeführt wird. Dabei wird davon ausgegangen, dass nach der Instandsetzung der Anlage die Aufnahmen der Anlage exakt oder so wenig wie möglich fehlerbehaftet sind. Somit können die in der Trainingsphase ermittelten Referenzstreumaße als so exakt wie möglich angesehen werden.

Die zuvor beschriebene Trainingsphase zur Ermittlung eines oder mehrerer Referenzstreumaße kann dabei in regelmäßigen oder unregelmäßigen zeitlichen Abständen und/oder nach der Untersuchung einer bestimmten Zahl von Werkstücken wiederholt werden. So kann beispielsweise vorgesehen sein, dass die Trainingsphase nach jeweils 50,100, oder 200 untersuchten Werkstücken oder nach einer gewissen Zeitspanne oder zu definierten Uhrzeiten wiederholt wird. Ferner können auch kombinierte Profile definiert werden, welche die Durchführung der Trainingsphase festlegen. So kann beispielsweise festgelegt werden, dass die Trainingsphase nach 200 Aufnahmen oder nach 2 Stunden Betriebszeit durchgeführt wird, je nachdem welcher Fall früher eintritt. Auf diese Weise können unter Anderem Veränderungen an dem verwendeten Computertomographen berücksichtigt werden, welche zwar zu einer systematischen Veränderung der gemessenen Werte führen können, jedoch nicht auf einen Verschleiß des Computertomographen zurückzuführen sind. Beispielsweise ist zu erwarten, dass mit der Zeit der Betrieb des Computertomographen zu einem Aufheizen von Systemkomponenten führt, was wiederum eine systematische Veränderung von gemessenen Werten nach sich ziehen kann. Gleicherma-ßen kann es sein, dass zu verschiedenen Uhrzeiten im alltäglichen Betrieb der Anlage verschiedene Auslastungen vorliegen, welche durch eine erneute Durchführung der Trainingsphase bei der Ermittlung der Referenzstreumaße berücksichtigt werden. Das Ergebnis einer Trainingsphase kann dabei ein vollständiges Erneuern oder nur ein teilweises Aktualisieren der Referenzstreumaße sein.

Um weitere äußere Einflüsse auf durchgeführte Aufnahmen zu berücksichtigen, ist nach einer weiteren Ausführungsform vorgesehen, dass wenigstens ein Referenzstreumaß von einem Umgebungsparameter der Anlage abhängig ist. Unter einem "Umgebungsparameter" kann dabei beispielsweise die Umgebungstemperatur, die Uhrzeit, das Wetter, die Laufzeit der Anlage oder ähnliches verstanden werden. Dabei kann beispielsweise durch wiederholte Trainingsphasen jeweils ein oder mehrere Referenzstreumaße bestimmt werden, wobei durch gleichzeitige Aufnahme der Umgebungsparameter eine Korrelation zwischen den Referenzstreumaßen und den Umgebungsparameter ermittelt werden kann. Diese Korrelation kann dann weiterhin genutzt werden, um systematische Ungenauigkeiten bei der Aufnahme von Messdaten, welche jedoch nicht auf einem Verschleiß der Anlage beruhen, zu berücksichtigen und entsprechend zu bewerten. Dementsprechend können für verschiedene Sätze von Umgebungsparametern in einer Datenbank Referenzstreumaße hinterlegt sein, welche je nach vorherrschenden Umgebungsparametern zur Überwachung des Funktionszustands der Anlage herangezogen werden. Ferner können Umgebungsparameter auch andere Aspekte wie Fertigungsmaschinenbediener, Messtechnikbediener und Toleranzen der Fertigung berücksichtigen.

In einer weiteren Ausführungsform werden die Messwerte aus einem oder mehreren Projektionsbildern des untersuchten Werkstücks und/oder aus einer mittels der Projektionsbilder des untersuchten Werkstücks erstellten dreidimensionalen Rekonstruktion des untersuchten Werkstücks ermittelt werden.

Um dauerhaft die korrekte Funktion des verwendeten Computertomographen zu gewährleisten, ist nach einer weiteren Ausführungsform vorgesehen, dass das Auswählen von Messwerten, das Ermitteln eines Streumaßes für die ausgewählten Messwerte und das Ermitteln des Funktionszustands der Anlage jeweils nach der Untersuchung wenigstens eines Werkstücks wiederholt wird. Beispielsweise kann nach 5, 10, 50, oder 100 Werkstücken jeweils wieder eine Bestimmung des Funktionszustands der Anlage im Sinne der zuvor beschriebenen Erfindung erfolgen. Bei der Wahl der Dichte von Bestimmungen des Funktionszustands, also der Zahl der Werkstückprüfungen, nach denen jeweils wieder eine Bestimmung des Funktionszustands anhand von Streumaßen durchgeführt wird, ist dabei einerseits die gewünschte Prüfdichte und andererseits die durch eine Prüfung verursachte Rechenlast zu berücksichtigen. Diese beiden Faktoren müssen je nach Anforderungen und verfügbaren Ressourcen gegeneinander abgewogen werden. Ferner kann dabei vorgesehen sein, dass die Dichte der Prüfungen nicht zeitlich konstant ist, sondern in Abhängigkeit von äußeren Parametern variiert wird. Beispielsweise kann vorgesehen sein, dass die Prüfdichte kurz nach dem Start der Anlage sehr hoch gewählt ist und mit zunehmender Betriebszeit zunächst abnimmt. Gleichermaßen kann auch vorgesehen sein, dass die Prüfdichte nach einer gewissen Betriebszeit wieder erhöht wird, da nach einem längeren Betrieb der Anlage eher mit Defekten oder einem Verschleiß der Anlage zu rechnen ist. Ferner kann die Prüfdichte auch von äußeren Parametern wie einer Umgebungstemperatur abhängen, oder kann kurzfristig gezielt von einem Betriebsleiter über ein entsprechend eingerichtetes EDV System eingestellt werden. Letzteres kann z.B. dann geschehen, wenn sich vorgegebene Toleranzen für zu messenden oder zu prüfende Messgrößen ändern oder wenn sich die Toleranzausnutzung der Werkstücke verändert.

Nach einer weiteren Ausführungsform ist vorgesehen, dass die Messwerte für die Ermittlung des Streumaßes aus Messungen an direkt aufeinander folgenden Werkstücken ausgewählt werden. Auf diese Weise kann eine gute Momentaufnahme des Zustands der Anlage realisiert werden.

Nach einer weiteren Ausführungsform umfassen die Messgrößen, welche zur Ermittlung der Streumaße verwendet werden, werkstückspezifische Messgrößen, wobei die werkstückspezifischen Messgrößen nur an einer bestimmten Werkstückart ermittelt werden können. Eine werkstückspezifische Messgröße ist demnach beispielsweise eine Abmessung einer bestimmten Geometrie des untersuchten Werkstücks oder eine mittlere lokale Oberflächenqualität in einer räumlich genau vorgegeneben Werkstückdomäne. Die Verwendung von werkstückspezifischen Messgrößen zur Bestimmung der Streumaße hat dabei den Vorteil, dass auftretende Schwankungen genau jene Messwerte betreffen, welche beispielsweise auch zur Beurteilung der Qualität der geprüften Werkstücke verwendet werden. Demnach ist es bei dieser Ausführungsform sehr unwahrscheinlich, dass eine Veränderung des Funktionszustands der Anlage, welche ungenaue oder nicht mehr repräsentative Messwerte verursacht, aufgrund einer ungünstigen Wahl der Messwerte nicht erkannt wird. Zudem wird durch diese werkstückspezifischen Messgrößen sichergestellt, dass für die Messgröße irrelevante Veränderungen der Anlage nicht zu einer Aussage über einen Anlagenfehler führen. Die Überwachung wird dadurch effizienter und wirtschaftlicher.

In analoger Art und Weise kann jedoch nach Ausführungsformen auch vorgesehen sein, dass die Messgrößen, welcher zur Ermittlung der Streumaße verwendet werden, werkstückunspezifische Messgrößen umfassen, wobei die werkstückunspezifischen Messgrößen an unterschiedlich gearteten Werkstücken ermittelt werden können. Bei einer werkstückunspezifischen Messgröße kann es sich beispielsweise um das über die Stichprobe hinweg schlechteste Signal-Rausch-Verhältnis der Materialgrauwerte in den relevanten Werkstückdomänen handeln. Ferner könnten auch die Abmessungen von genormten Werkstückabschnitten, wie beispielsweise genormte Schraublöcher zur Ermittlung einer werkstückunspezifischen Messgröße herangezogen werden. Die Verwendung von werkstückunspezifischen Messgrößen hat dabei den Vorteil, dass unterschiedliche Werkstücke mit ein und derselben computertomographischen Anlage überprüft werden können und trotzdem eine Bewertung des Funktionszustands der Anlage aus den Messungen an den unterschiedlichen Werkstücken möglich ist. Somit werden die Anwendungsszenarien der vorgenommenen Überwachung flexibler.

Nach einer weiteren Ausführungsform ist vorgesehen, dass die für die Bestimmung des wenigstens einen Streumaßes ausgewählten Messwerte aus wenigstens einem definierten Teilbereich eines Werkstücks stammen, für den ein aus den Messwerten ermitteltes Streumaß für eine Messgröße mit dem Referenzstreumaß für die Messgröße verglichen werden kann. Insbesondere kann dabei ein Teilbereich eines Werkstücks gewählt werden, dem bei der Qualitätsprüfung des Werkstücks eine besondere Relevanz zukommt. Beispielsweise kann vorgesehen sein, dass für das Referenzstreumaß die Porendichte in einem strukturell wichtigen Abschnitt eines untersuchten Werkstücks verwendet wird. Auf diese Weise kann ebenfalls sichergestellt werden, dass eine Veränderung bzw. Verschlechterung des Funktionszustands der Anlage insbesondere bei relevanten Messgrößen sicher erkannt wird.

In einem weiteren Aspekt betrifft die Erfindung eine Vorrichtung zur Überwachung eines Funktionszustands einer Anlage zur computertomographischen Untersuchung von Werkstücken, wobei die computertomographische Untersuchung eines Werkstücks das Durchführen einer oder mehrerer computertomographischer Messungen an dem Werkstück mittels einer Anlage umfasst, wobei die von der Anlage durchgeführten Messungen jeweils wenigstens einen Messwert für wenigstens eine Messgröße ergeben. Die Vorrichtung zur Überwachung des Funktionszustands ist dabei dazu ausgebildet:
- Messwerte für wenigstens eine Messgröße aus wenigstens zwei Messungen an einem oder mehreren Werkstücken auszuwählen,
- Wenigstens ein Streumaß für die ausgewählten Messwerte der wenigstens einen Messgröße zu ermitteln,
- Wenigstens ein Referenzstreumaß für Messwerte der wenigstens einen Messgröße zu ermitteln, und
- den Funktionszustand der Anlage durch Vergleichen des wenigstens einen ermittelten Streumaßes mit dem wenigstens einen Referenzstreumaß für die wenigstens eine Messgröße zu ermitteln,
wobei das Streumaß eine Information über eine Verteilung der Messwerte aufweist.

In noch einem weiteren Aspekt betrifft die Erfindung ein Computerprogrammprodukt mit von einem Computer ausführbaren Instruktionen, welche auf einem Computer ausgeführt den Computer dazu veranlassen, das Verfahren, wie es zuvor beschrieben wurde, durchzuführen. Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine schematische Darstellung einer beispielhaften Produktionsumgebung zur Anwendung des erfindungsgemäßen Verfahrens, und
- Fig. 2: ein Flussdiagramm des erfindungsgemäßen Verfahrens.

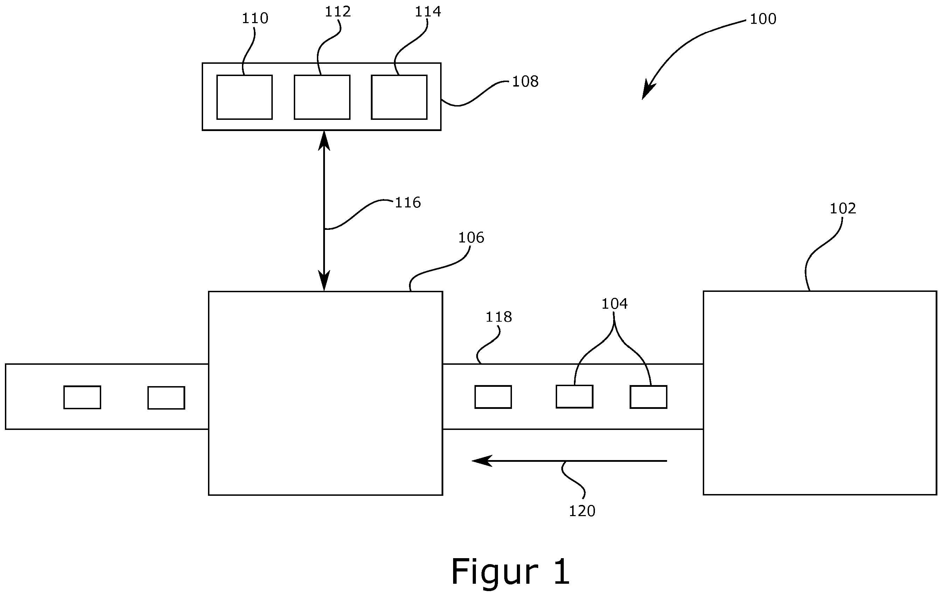

Die Figur 1 zeigt eine schematische Darstellung einer Umgebung 100, in welcher das erfindungsgemäße Verfahren angewandt werden kann. Bei der Umgebung 100 handelt es sich um eine Produktionsumgebung, in der exemplarisch eine Herstellungsanlage 102 angeordnet ist, welche dazu ausgebildet ist, Werkstücke 104 zu produzieren. Bei der Herstellungsanlage 102 kann es sich beispielsweise um eine Spritzgussanlage zur Herstellung von Spritzgussteilen handeln. Die so erzeugten Werkstücke 104 werden anschließend einer Anlage 106 zur computertomographischen Untersuchung der Werkstücke 104 zugeführt. Dies kann beispielsweise durch ein exemplarisch dargestelltes Laufband 118 mit der Laufrichtung 120 erfolgen. Durch den dargestellten Aufbau könnte eine In-Line Prüfung von durch die Herstellungsanlage 102 erzeugten Werkstücken 104 erfolgen.

Bei der mit der Anlage 106 durchgeführten computertomographischen Untersuchung sollen die Werkstücke 104 auf Ihre Fertigungsqualität hin überprüft werden. Auf Grundlage dieser Überprüfung kann beispielsweise entschieden werden, ob ein Werkstück 104 einem Satz von Mindestanforderungen bezüglich der Qualität entspricht und somit in den Verkauf/Vertrieb gehen kann, oder ob das Werkstück 104 aufgrund unzureichender Fertigungsqualität als Ausschuss anzusehen ist. Hierzu ist die Anlage 106 beispielsweise dazu ausgebildet, radiographische Projektionsbilder der überprüften Werkstücke 104 zu erzeugen, welche mittels einer der Anlage 106 zugeordneten EDV-Anlage 108 analysiert werden können. Die EDV-Anlage 108 ist hierzu wenigstens mit Prozessormitteln 110, Speichermitteln 112 und Anzeigemitteln 114 ausgestattet und über eine Kommunikationsverbindung 116 mit der Anlage 106 verbunden. Die Analyse durch die EDV-Anlage 108 kann sich dabei sowohl auf die aufgenommenen radiographischen Projektionsbilder beziehen, als auch auf aus den radiographischen Projektionsbildern rekonstruierte Darstellungen des untersuchten Werkstücks 104. Dabei können sowohl dreidimensionale als auch zweidimensionale Rekonstruktionen des Werkstücks 104 zur Analyse herangezogen werden. Über die Kommunikationsverbindung 116 können Messdaten an die EDV-Anlage 108 übermittelt werden, welche dort in den Speichermitteln 112 abgelegt und/oder durch die Prozessormittel 110 verarbeitet werden können.

Bei den Prozessormitteln 110 kann es sich beispielsweise um einen oder mehrere Ein- oder Mehrkernprozessoren handeln. Gleichermaßen kann es sich bei den Speichermitteln um 112 jede beliebige Form von Datenspeicher handeln. Die Anzeigemittel 114 können beispielhaft durch einen oder mehrere Monitore und/oder durch Signalleuchten realisiert werden. Die EDV-Anlage 108 ist hierbei rein exemplarisch als zusammenhängende Einheit dargestellt. Bei der EDV-Anlage 108 kann es sich selbstverständlich auch um ein System von Computersystemen handeln. Die einzelnen Computersysteme müssen dabei nicht zwingend räumlich gruppiert sein. Vielmehr kann auch ein verteiltes Computersystem als EDV-Anlage 108 eingesetzt werden, beispielweise im Sinne des Cloud-Computing.

Aus der Analyse der radiographischen Projektionsbilder eines Werkstücks und/oder aus der Analyse einer vollständigen zwei- oder dreidimensionalen Rekonstruktion des Werkstücks 104 aus den Projektionsbildern ist das EDV-System 108 mittels entsprechender Software dazu ausgebildet, Messwerte für verschiedene Messgrößen der Werkstücke zu ermitteln. Beispielsweise kann es sich dabei bei einer Messgröße um eine Kantenposition, eine mittlere Oberflächenqualität, eine Materialdichte, eine Porendichte oder ähnliche Größen handeln. Eine Messgröße kann jedoch auch werkstückunspezifisch sein und ein Maß für die Bildqualität der aufgenommen Projektionsbilder angeben. Die für diese Messgrößen ermittelten Messwerte werden dann gegen zulässige Wertebereiche oder Grenzwerte geprüft und anhand der Übereinstimmung mit den Wertebereichen und/oder Grenzwerten bestimmt, ob ein Werkstück 104 den Qualitätsanforderungen entspricht.

Bei dem Betrieb einer computertomographischen Anlage 106 kann es im Betrieb zu einer Vielzahl von Effekten kommen, welche die zuvor beschriebene Untersuchung und Bewertung von Werkstücken 104 beeinflussen. Beispielsweise kommt es mit fortlaufender Betriebsdauer der Anlage 106 beispielsweise zu Verschleißerscheinungen an der verwendeten Röntgenröhre, was sich in steigenden Rauschwerten der erzeugten Projektionsbilder oder der Rekonstruktionsdarstellungen des Werkstücks 104 niederschlägt. Ferner kann sich aufgrund mechanischer Effekte wie Stößen und Vibrationen die Einstellung der Fokussieroptik des Computertomographen verändern, wodurch die erzeugten Messwerte ebenfalls verfälscht werden. Diese Effekte können unter Umständen dazu führen, dass bei der Analyse eines Werkstücks 104 Messwerte ermittelt werden, welche zu einer Bewertung der Qualität des Werkstücks 104 als ausreichend bzw. unzureichend führen, obwohl dies eigentlich nicht der Fall ist. Während bei einer irrtümlichen Bewertung der Qualität eines Werkstücks 104 als unzureichend lediglich der Ausschuss unnötig in die Höhe getrieben wird, kann bei dem umgekehrten Fall, also der irrtümlichen Bewertung der Qualität eines Werkstücks 104 als ausreichend, schnell ein Haftungsfall für den Anlagenbetreiber entstehen, sollte es zu einem Unfall oder einer anderen folgenschweren Fehlfunktion des Werkstücks kommen. Somit muss zu jeder Zeit gewährleistet werden, dass die mittels der Anlage 106 bestimmten Messwerte repräsentativ sind.

Hierzu ist das EDV-System 108 mittels des erfindungsgemäßen Verfahrens dazu ausgebildet, aus den ermittelten Messwerten der Werkstücke 104 zusätzlich zu einer Beurteilung von deren Qualität auch eine Bewertung bzw. Überwachung des Funktionszustands der Anlage 106 abzuleiten.

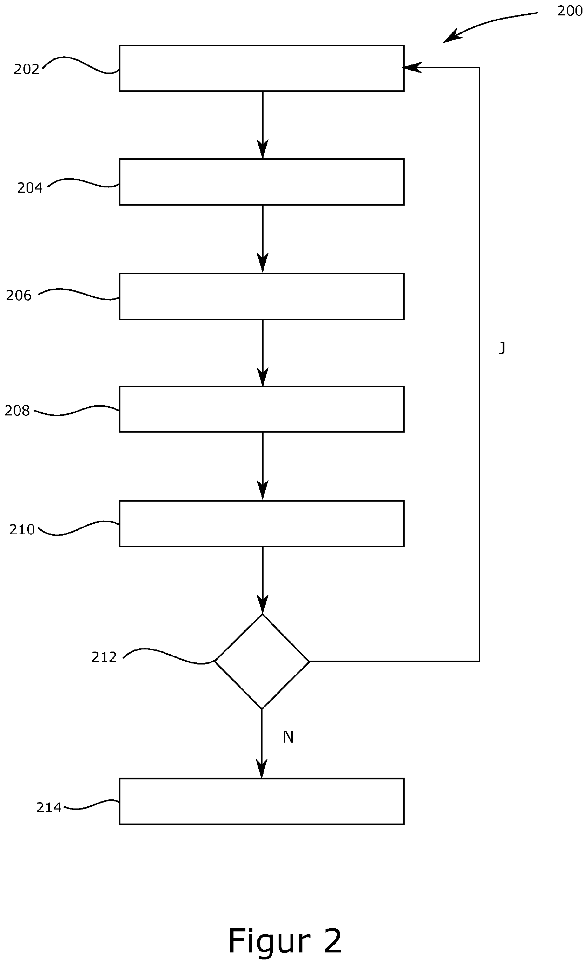

Das erfindungsgemäße Verfahren ist in Figur 2 in Form eines Flussdiagramms 200 dargestellt.

Dabei werden in einem ersten Verfahrensschritt 202 zunächst durch eine computertomographische Abbildung wenigstens eines Werkstücks 104 Messdaten für das oder die Werkstücke 104 ermittelt. Im Zuge der Auswertung der so erhaltenen Messdaten werden dann Messwerte zu einer oder mehreren Messgrößen für das wenigstens eine Werkstück 104 bestimmt. Dabei kann es sich um dieselben Messgrößen handeln, welche auch zur Bewertung der Qualität der Werkstücke 104 verwendet werden. Es ist jedoch auch möglich spezielle abgeleitete Größen zu definieren, welche nur zur Überwachung des Funktionszustands der Anlage 106 verwendet werden.

Aus der Vielzahl von Messwerten, welche im Zuge der Untersuchung von Werkstücken 104 ermittelt wurden, werden dann in Schritt 204 eine Menge von Messwerten ausgewählt, welche zur Ermittlung des Funktionszustands der Anlage 106 verwendet werden sollen. Dabei können beispielsweise Messwerte aus Messungen an direkt aufeinander folgenden Werkstücken 104 verwendet werden, um eine möglichst hohe Überwachungsdichte zu erzielen. Es ist jedoch auch möglich, dass nur Messungen an einem einzigen Werkstück 104 herangezogen werden. Ferner werden vorzugsweise Messwerte zur Beurteilung des Funktionszustands herangezogen, welche mit einer möglichst geringen Messunsicherheit behaftet sind.

Aus den so ausgewählten Messwerten wird dann in Schritt 206 ein Streumaß für die Messwerte ermittelt. Bei dem Streumaß handelt es sich um ein statistisches Maß, wie beispielsweise die Varianz, ein Werte-Intervall, oder der ähnliches .

Um eine möglichst gute Einschätzung der Statistik der Messwerte zu erhalten ist es dabei sinnvoll eine ausreichend große Stichprobe in Schritt 204 auszuwählen. Dabei sollte jedoch auch berücksichtigt werden, dass eine zu große Stichprobe einen hohen Datenverarbeitungsaufwand nach sich zieht, sodass hier entsprechend den Anforderungen und verfügbaren Ressourcen eine Abwägung stattfinden sollte.

Neben dem Streumaß der Messwerte aus den Messungen an den Werkstücken wird ferner in Schritt 208 ein Referenzstreumaß ermittelt. Dabei sollte das Referenzstreumaß vorzugsweise eine Information zur Statistik genau jener Messgröße liefern, welche bei der Ermittlung des Streumaßes bzw. der Streumaße in Schritt 206 verwendet werden. Es muss sich dabei jedoch bei der Art des Referenzstreumaßes nicht zwingend um dieselbe Art von statistischer Information handeln, welche bei der Bestimmung des Streumaßes der Messwerte gewählt wurde. Dabei kann vorgesehen sein, dass in den Speichermitteln 112 der EDV-Anlage 108 Referenzstreumaße hinterlegt sind, sodass zur Ermittlung der Referenzstreumaße lediglich auf die Speichermittel 112 zugegriffen werden muss und die benötigten Referenzstreumaße abgerufen werden.

Es ist jedoch auch möglich, dass die Referenzstreumaße in einer separaten Trainingsphase ermittelt werden. Dabei werden wiederum Messwerte aus Messungen an Werkstücken 104 ausgewählt und aus den ausgewählten Messwerten statistische Maße bestimmt, welche dann als Referenzstreumaß genutzt werden. Dabei wird eine solche Trainingsphase vorzugsweise kurz bzw. direkt nach einer Instandsetzung der Anlage 106 durchgeführt, da zu diesem Zeitpunkt davon auszugehen ist, dass die Anlage im bestmöglichen Zustand ist und somit repräsentative Ergebnisse liefert. Die Verwendung einer solchen Trainingsphase kann überdies den Vorteil haben, dass zur Ermittlung der Referenzstreumaße Messwerte aus Messungen an den gleichen Werkstücken 104 verwendet werden können, deren Qualität im Weiteren anhand der Aufnahmen der Anlage 106 beurteilt werden soll. Somit können insbesondere auch werkstückspezifische Messgrößen verwendet werden um den Funktionszustand der Anlage 106 zu bewerten.

Ferner ist es möglich, dass Referenzstreumaße im laufenden Betrieb wiederholt ermittelt werden. Hierdurch kann beispielsweise eine systematischer Drift in den aufgenommenen Messwerten, welcher jedoch nicht auf einen Verschleiß oder einen Fehler der Anlage 106 zurückzuführen ist, berücksichtigt werden. Dementsprechend können auch für ein und dieselbe Messgröße unterschiedliche Referenzstreumaße existieren, welche in Abhängigkeit von weiteren Parametern, wie beispielsweise der Umgebungstemperatur, der Tageszeit oder Betriebszeit der Anlage 106 angewendet werden. Weiter kann ein Referenzstreumaß auch aus mehreren Werten bestehen. Beispielsweise kann das Referenzstreumaß für eine bestimmte Messgröße einen Mittelwert und eine Standardabweichung umfassen.

Nachdem ein Referenzstreumaß ermittelt wurde, findet anschließend in Schritt 210 ein Vergleich der Streumaße, also des aus den Messwerten ermittelten Streumaßes mit dem oder den Referenzstreumaßen statt. Aus diesem Vergleich wird dann der Funktionszustand der Anlage 106 abgeleitet. Beispielsweise kann hierzu ein Unterschied zwischen dem Streumaß und dem Referenzstreumaß ermittelt werden. Die Bedeutung des Begriffs "Unterschied" hängt dabei von der Art der verwendeten Streumaße ab.

Bei dem zuvor beschriebenen Vergleich des Unterschieds mit einem Grenzwert muss nicht zwingend nur ein Grenzwert vorgesehen sein. Es kann vielmehr auch vorgesehen sein, dass eine Mehrzahl von Grenzwerten oder Werteintervallen definiert ist, welche eine stufenweise Bewertung des Funktionszustands der Anlage 106 ermöglichen. Auf diese Weise kann eine Zustandsampel der Anlage 106 realisiert werden, welche beispielsweise anzeigt ob die Anlage 106 sehr gut, noch ausreichend oder nicht mehr ausreichend genau arbeitet. Dabei kann die beschriebene Bewertungszwischenstufe hilfreich bei der Nutzungsplanung der Anlage 106 sein. Aus dem Vergleich des oder der Streumaße mit entsprechenden Referenzstreumaßen wird in Schritt 212 entschieden, ob der Zustand der Anlage 212 ausreichend ist, um repräsentative Ergebnisse zu liefern, oder ob eine Wartung notwendig ist. Wird hierbei festgestellt, dass der Zustand der Anlage 106 in Ordnung ist, wird die Prüfung von Werkstücken 104 unverändert fortgesetzt. Wird hingegen festgestellt, dass der Zustand der Anlage 106 nicht mehr ausreichend ist, kann in Schritt 214 eine Warnung ausgegeben werden. Bei der Warnung kann es sich im einfachsten Fall um ein optisches oder akustisches Signal handeln.

Es kann an dieser Stelle auch vorgesehen sein, dass nach der Ermittlung des Zustands der Anlage 106 eine Information, welche den Zustand der Anlage 106 beschreibt, erzeugt und beispielsweise in den Speichermitteln 112 der EDV-Systems 108 abgelegt wird. Dabei kann beispielsweise ein zeitlicher Verlauf des Zustands der Anlage 106 ermittelt werden, aus dem wiederum ein Zeitpunkt extrapoliert werden kann, zu dem die Anlage 106 nicht mehr ausreichend genau arbeiten wird. Hierdurch kann ein optimierter Nutzungs- und/oder Wartungsplan für die Anlage 106 erstellt werden.

Die Erfindung ist nicht auf eine der vorbeschriebenen Ausführungsformen beschränkt, sondern in vielfältiger Weise innerhalb des Gegenstands der Ansprüche abwandelbar.

### Bezugszeichenliste

- 100: Produktionsumgebung
- 102: Herstellungsanlage
- 104: Werkstück
- 106: computertomographische Anlage
- 108: EDV-Anlage
- 110: Prozessormittel
- 112: Speichermittel
- 114: Anzeigemittel
- 116: Kommunikationsverbindung
- 118: Laufband
- 120: Laufrichtung

## Patentansprüche

1. Computer-implementiertes Verfahren zur Überwachung des Funktionszustands einer Anlage (106) zur computertomographischen Untersuchung von Werkstücken (104), wobei die computertomographische Untersuchung eines Werkstücks (104) mittels der Anlage (106) das Durchführen einer oder mehrerer computertomographischer Messungen an dem Werkstück (104) umfasst, wobei die von der Anlage (106) durchgeführten computertomographischer Messungen jeweils wenigstens einen Messwert für wenigstens eine Messgröße ergeben, wobei das Verfahren zur Überwachung des Funktionszustands die nachfolgenden Schritte aufweist:
• Auswählen von Messwerten für wenigstens eine Messgröße aus wenigstens zwei computertomographischen Messungen an einem oder mehreren Werkstücken (104),
• Ermitteln wenigstens eines Streumaßes für die ausgewählten Messwerte der wenigstens einen Messgröße,
• Ermitteln wenigstens eines Referenzstreumaßes für Messwerte der wenigstens einen Messgröße, und
• Ermitteln des Funktionszustands der Anlage (106) durch Vergleichen des wenigstens einen ermittelten Streumaßes mit dem wenigstens einen Referenzstreumaß für die wenigstens eine Messgröße,
wobei das Streumaß eine Information über eine Verteilung der Messwerte aufweist.

2. Verfahren nach Anspruch 1, **dadurch gekennzeichnet, dass** das Ermitteln des Funktionszustandes der Anlage (106) die nachfolgenden Schritte aufweist:
• Ermitteln eines Unterschieds zwischen dem wenigstens einen ermittelten Streumaß und dem wenigstens einen Referenzstreumaß,
• Vergleichen des ermittelten Unterschieds mit wenigstens einem zulässigen Wertebereich für den Unterschied,
• wenn der Unterschied außerhalb des wenigstens einen zulässigen Wertebereichs liegt, das Ausgeben einer Information,
wobei die Information anzeigt, dass der Unterschied außerhalb wenigstens eines zulässigen Wertebereichs liegt.

3. Verfahren nach Anspruch 1 oder 2, **dadurch gekennzeichnet, dass** das Ermitteln des Funktionszustands der Anlage (106) das Ermitteln eines zeitlichen Verlaufs der ermittelten Streumaße für eine Messgröße aufweist, wobei durch Vergleich des ermittelten Verlaufs mit dem wenigstens einen Referenzstreumaß abgeschätzt wird, wann ein Unterschied zwischen dem Streumaß und dem Referenzstreumaß außerhalb wenigstens eines zulässigen Wertebereichs für den Unterschied liegen wird.

4. Verfahren nach einem der vorherigen Ansprüche, **dadurch gekennzeichnet, dass** das wenigstens eine Referenzstreumaß in einer Trainingsphase ermittelt wird, wobei die Trainingsphase die folgenden Schritte aufweist:
• Auswählen von Referenzmesswerten für wenigstens eine Messgröße aus einer Referenzmessreihe mit einer Mehrzahl von computertomographischen Messungen an einer Mehrzahl von Werkstücken (104),
• Ermitteln des wenigstens einen Referenzstreumaßes aus den ausgewählten Referenzmesswerten der wenigstens einen Messgröße der Referenzmessreihe.

5. Verfahren nach Anspruch 4, **dadurch gekennzeichnet, dass** die Trainingsphase unmittelbar nach einer Instandsetzung und Wiederinbetriebnahme und/oder einer Einmessung und Wiederinbetriebnahme der Anlage (106) zur computertomographischen Untersuchung von Werkstücken (104) durchgeführt wird.

6. Verfahren nach Anspruch 4 oder 5, **dadurch gekennzeichnet, dass** die Trainingsphase in regelmäßigen oder unregelmäßigen zeitlichen Abständen und/oder nach der Untersuchung einer bestimmten Zahl von Werkstücken wiederholt wird.

7. Verfahren nach einem der vorherigen Ansprüche, **dadurch gekennzeichnet, dass** wenigstens ein Referenzstreumaß von einem Umgebungsparameter der Anlage (106) abhängig ist.

8. Verfahren nach einem der vorherigen Ansprüche, **dadurch gekennzeichnet, dass** die Messwerte aus einem oder mehreren Projektionsbildern des untersuchten Werkstücks (104) und/oder aus einer mittels der Projektionsbilder des untersuchten Werkstücks (104) erstellten dreidimensionalen Rekonstruktion des untersuchten Werkstücks (104) ermittelt werden.

9. Verfahren nach einem der vorherigen Ansprüche, **dadurch gekennzeichnet, dass** das Auswählen von Messwerten, das Ermitteln wenigstens eines Streumaßes für die ausgewählten Messwerte und das Ermitteln des Funktionszustands der Anlage (106) jeweils nach der Untersuchung wenigstens eines Werkstücks (104) wiederholt wird.

10. Verfahren nach einem der vorherigen Ansprüche, **dadurch gekennzeichnet, dass** die Messwerte für die Ermittlung des Streumaßes aus computertomographischen Messungen an direkt aufeinander folgenden Werkstücken (104) ausgewählt werden.

11. Verfahren nach einem der vorherigen Ansprüche, **dadurch gekennzeichnet, dass** mehrere Messgrößen vorhanden sind und die Messgrößen werkstückspezifische Messgrößen umfassen, wobei die werkstückspezifischen Messgrößen nur an einer bestimmten Werkstückart ermittelt werden können.

12. Verfahren nach einem der vorherigen Ansprüche, **dadurch gekennzeichnet, dass** mehrere Messgrößen vorhanden sind und die Messgrößen werkstückunspezifische Messgrö-ßen umfassen, wobei die werkstückunspezifischen Messgrößen an unterschiedlich gearteten Werkstücken ermittelt werden können.

13. Verfahren nach einem der vorhergehenden Ansprüche, **dadurch gekennzeichnet, dass** die für die Bestimmung des Streumaßes ausgewählten Messwerte aus wenigstens einem definierten Teilbereich eines Werkstücks (104) stammen, für den ein aus den Messwerten ermitteltes Streumaß für wenigstens eine Messgröße mit dem Referenzstreumaß für die Messgröße verglichen werden kann.

14. Vorrichtung (108) zur Überwachung eines Funktionszustands einer Anlage (106) zur computertomographischen Untersuchung von Werkstücken (104), wobei die computertomographische Untersuchung eines Werkstücks (104) das Durchführen einer oder mehrerer computertomographischer Messungen an dem Werkstück (104) mittels einer Anlage (106) umfasst, wobei die von der Anlage (106) durchgeführten Messungen jeweils wenigstens einen Messwert für wenigstens eine Messgröße ergeben, **dadurch gekennzeichnet, dass** die Vorrichtung (108) zur Überwachung des Funktionszustands dazu ausgebildet ist:
• Messwerte für wenigstens eine Messgröße aus wenigstens zwei Messungen an einem oder mehreren Werkstücken (104) auszuwählen,
• Wenigstens ein Streumaß für die ausgewählten Messwerte der wenigstens einen Messgröße zu ermitteln,
• Wenigstens ein Referenzstreumaß für Messwerte der wenigstens einen Messgrö-ße zu ermitteln, und
• Den Funktionszustand der Anlage (106) durch Vergleichen des wenigstens einen ermittelten Streumaßes mit dem wenigstens einen Referenzstreumaß für die wenigstens eine Messgröße zu ermitteln,
wobei das Streumaß eine Information über eine Verteilung der Messwerte aufweist.

15. Computerprogrammprodukt mit von einem Computer ausführbaren Instruktionen, welche auf einem Computer ausgeführt den Computer dazu veranlassen, das Verfahren nach einem der Ansprüche 1 bis 13 durchzuführen.

## Claims

1. Computer-implemented method for monitoring the functional state of an installation (106) for computed-tomography examination of workpieces (104), wherein the computed-tomography examination of a workpiece (104) comprises the performing of one or more computed-tomography measurements on the workpiece (104) by means of the installation (106), wherein the computed-tomography measurements performed by the installation (106) each result in at least one measured value for at least one measured variable, wherein the method for monitoring the functional state comprises the following steps:
• selecting measured values for at least one measured variable from at least two computed-tomography measurements on one or more workpieces (104),
• ascertaining at least one scatter measure for the selected measured values of the at least one measured variable,
• ascertaining at least one reference scatter measure for measured values of the at least one measured variable, and
• ascertaining the functional state of the installation (106) by comparing the at least one ascertained scatter measure with the at least one reference scatter measure for the at least one measured variable,
wherein the scatter measure comprises information about a distribution of the measured values.

2. Method according to Claim 1, **characterized in that** the ascertaining of the functional state of the installation (106) comprises the following steps:
• ascertaining a difference between the at least one ascertained scatter measure and the at least one reference scatter measure,
• comparing the ascertained difference with at least one permissible range of values for the difference,
• if the difference is outside the at least one permissible range of values, outputting information,
wherein the information indicates that the difference is outside at least one permissible range of values.

3. Method according to Claim 1 or 2, **characterized in that** the ascertaining of the functional state of the installation (106) comprises the ascertaining of a time characteristic of the ascertained scatter measure for a measured variable, wherein comparison of the ascertained characteristic with the at least one reference scatter measure estimates when a difference between the scatter measure and the reference scatter measure will be outside at least one permissible range of values for the difference.

4. Method according to one of the preceding claims, **characterized in that** the at least one reference scatter measure is ascertained in a training phase, wherein the training phase comprises the following steps:
• selecting reference measured values for at least one measured variable from a reference measurement series having a plurality of computed-tomography measurements on a plurality of workpieces (104),
• ascertaining the at least one reference scatter measure from the selected reference measured values of the at least one measured variable of the reference measurement series.

5. Method according to Claim 4, **characterized in that** the training phase is performed immediately after a repair and restarting and/or an initial measurement and restarting of the installation (106) for computed-tomography examination of workpieces (104).

6. Method according to Claim 4 or 5, **characterized in that** the training phase is repeated at regular or irregular intervals of time and/or after the examination of a particular number of workpieces.

7. Method according to one of the preceding claims, **characterized in that** at least one reference scatter measure is dependent on an environmental parameter of the installation (106).

8. Method according to one of the preceding claims, **characterized in that** the measured values are ascertained from one or more projection images of the examined workpiece (104) and/or from a three-dimensional reconstruction of the examined workpiece (104) that is produced by means of the projection images of the examined workpiece (104).

9. Method according to one of the preceding claims, **characterized in that** the selecting of measured values, the ascertaining of at least one scatter measure for the selected measured values and the ascertaining of the functional state of the installation (106) are each repeated after the examination of at least one workpiece (104).

10. Method according to one of the preceding claims, **characterized in that** the measured values for the ascertainment of the scatter measure are selected from computed-tomography measurements on directly successive workpieces (104).

11. Method according to one of the preceding claims, **characterized in that** multiple measured variables are available and the measured variables comprise workpiece-specific measured variables, wherein the workpiece-specific measured variables can be ascertained only on a particular kind of workpiece.

12. Method according to one of the preceding claims, **characterized in that** multiple measured variables are available and the measured variables comprise workpiece-aspecific measured variables, wherein the workpiece-aspecific measured variables can be ascertained on different kinds of workpieces.

13. Method according to one of the preceding claims, **characterized in that** the measured values selected for the determination of the scatter measure come from at least one defined subregion of a workpiece (104), for which a scatter measure, ascertained from the measured values, for at least one measured variable can be compared with the reference scatter measure for the measured variable.

14. Apparatus (108) for monitoring a functional state of an installation (106) for computed-tomography examination of workpieces (104), wherein the computed-tomography examination of a workpiece (104) comprises the performing of one or more computed-tomography measurements on the workpiece (104) by means of an installation (106), wherein the measurements performed by the installation (106) each result in at least one measured value for at least one measured variable, **characterized in that** the apparatus (108) for monitoring the functional state is designed to:
• select measured values for at least one measured variable from at least two measurements on one or more workpieces (104),
• ascertain at least one scatter measure for the selected measured values of the at least one measured variable,
• ascertain at least one reference scatter measure for measured values of the at least one measured variable, and
• ascertain the functional state of the installation (106) by comparing the at least one ascertained scatter measure with the at least one reference scatter measure for the at least one measured variable,
wherein the scatter measure comprises information about a distribution of the measured values.

15. Computer program product having computer-executable instructions that, when executed on a computer, cause the computer to perform the method according to one of Claims 1 to 13.

## Revendications

1. Procédé mis en œuvre par ordinateur de surveillance de l'état de fonctionnement d'un équipement (106) destiné à l'analyse tomodensitométrique de pièces ouvrées (104), l'analyse tomodensitométrique d'une pièce ouvrée (104) au moyen de l'équipement (106) comprenant la réalisation d'une ou plusieurs mesures tomodensitométriques sur la pièce ouvrée (104), les mesures tomodensitométriques réalisées par l'équipement (106) produisant respectivement au moins une valeur de mesure pour au moins une grandeur de mesure, le procédé de surveillance de l'état de fonctionnement comprenant les étapes suivantes :
* sélection de valeurs de mesure pour au moins une grandeur de mesure à partir de deux mesures tomodensitométriques sur une ou plusieurs pièces ouvrées (104),
* détermination d'au moins un indice de dispersion pour les valeurs de mesure sélectionnées de l'au moins une grandeur de mesure,
* détermination d'au moins un indice de dispersion de référence pour des valeurs de mesure de l'au moins une grandeur de mesure, et
* détermination de l'état de fonctionnement de l'équipement (106) par comparaison de l'au moins un indice de dispersion déterminé avec l'au moins un indice de dispersion de référence pour l'au moins une grandeur de mesure,
l'indice de dispersion présentant une information à propos d'une distribution des valeurs de mesure.

2. Procédé selon la revendication 1, **caractérisé en ce que** la détermination de l'état de fonctionnement de l'équipement (106) comprend les étapes suivantes :
* détermination d'une différence entre l'au moins un indice de dispersion déterminé et l'au moins un indice de dispersion de référence,
* comparaison de la différence déterminée avec au moins une plage de valeurs admissibles pour la différence,
* lorsque la différence se trouve en-dehors de l'au moins une plage de valeurs admissibles, délivrance d'une information,
l'information indiquant que la différence se trouve en-dehors d'au moins une plage de valeurs admissibles.

3. Procédé selon la revendication 1 ou 2, **caractérisé en ce que** la détermination de l'état de fonctionnement de l'équipement (106) comprend la détermination d'une évolution dans le temps de l'indice de dispersion déterminé pour une grandeur de mesure, la comparaison de l'évolution déterminée avec l'au moins un indice de dispersion de référence permettant d'estimer à quel moment une différence entre l'indice de dispersion et l'indice de dispersion de référence se trouvera en-dehors d'au moins une plage de valeurs admissibles pour la différence.

4. Procédé selon l'une des revendications précédentes, **caractérisé en ce que** l'au moins un indice de dispersion de référence est déterminé dans une phase d'entraînement, la phase d'entraînement comprenant les étapes suivantes :
* sélection de valeurs de mesure de référence pour au moins une grandeur de mesure à partir d'une série de mesures de référence avec une pluralité de mesures tomodensitométriques sur une pluralité de pièces ouvrées (104),
* détermination de l'au moins un indice de dispersion de référence à partir des valeurs de mesure de référence sélectionnées de l'au moins une grandeur de mesure de la série de mesures de référence.

5. Procédé selon la revendication 4, **caractérisé en ce que** la phase d'entraînement est effectuée directement après une réparation et une remise en service et/ou un calibrage et une remise en service de l'équipement (106) destiné à l'analyse tomodensitométrique de pièces ouvrées (104) .

6. Procédé selon la revendication 4 ou 5, **caractérisé en ce que** la phase d'entraînement est répétée à des intervalles de temps réguliers ou irréguliers et/ou après l'analyse d'un nombre spécifié de pièces ouvrées.

7. Procédé selon l'une des revendications précédentes, **caractérisé en ce que** l'au moins un indice de dispersion de référence dépend d'un paramètre d'environnement de l'équipement (106).

8. Procédé selon l'une des revendications précédentes, **caractérisé en ce que** les valeurs de mesure sont déterminées à partir d'une ou plusieurs images de projection de la pièce ouvrée (104) analysée et/ou à partir d'une reconstruction tridimensionnelle de la pièce ouvrée (104) analysée créée à partir des images de projection de la pièce ouvrée (104) analysée.

9. Procédé selon l'une des revendications précédentes, **caractérisé en ce que** la sélection de valeurs de mesure, la détermination d'au moins un indice de dispersion pour les valeurs de mesure sélectionnées et la détermination de l'état de fonctionnement de l'équipement (106) sont respectivement répétées après l'analyse d'au moins une pièce ouvrée (104).

10. Procédé selon l'une des revendications précédentes, **caractérisé en ce que** les valeurs de mesure pour la détermination de l'indice de dispersion sont sélectionnées à partir de mesures tomodensitométriques sur des pièces ouvrées (104) qui se suivent directement.

11. Procédé selon l'une des revendications précédentes, **caractérisé en ce que** plusieurs grandeurs de mesure sont présentes et les grandeurs de mesure comprennent des grandeurs de mesure spécifiques à la pièce ouvrée, les grandeurs de mesure spécifiques à la pièce ouvrée ne pouvant être déterminées que sur un type de pièce ouvrée spécifié.

12. Procédé selon l'une des revendications précédentes, **caractérisé en ce que** plusieurs grandeurs de mesure sont présentes et les grandeurs de mesure comprennent des grandeurs de mesure spécifiques à la pièce ouvrée, les grandeurs de mesure spécifiques à la pièce ouvrée pouvant être déterminées sur des pièces ouvrées ayant des types différents.

13. Procédé selon l'une des revendications précédentes, **caractérisé en ce que** les valeurs de mesure sélectionnées pour la spécification de l'indice de dispersion proviennent d'au moins une zone partielle définie d'une pièce ouvrée (104), pour laquelle un indice de dispersion pour au moins une grandeur de mesure, déterminé à partir des valeurs de mesure, peut être comparé avec l'indice de dispersion de référence pour la grandeur de mesure.

14. Dispositif (108) de surveillance d'un état de fonctionnement d'un équipement (106) destiné à l'analyse tomodensitométrique de pièces ouvrées (104), l'analyse tomodensitométrique d'une pièce ouvrée (104) comprenant la réalisation d'une ou plusieurs mesures tomodensitométriques sur la pièce ouvrée (104) au moyen d'un équipement (106), les mesures réalisées par l'équipement (106) produisant respectivement au moins une valeur de mesure pour au moins une grandeur de mesure, **caractérisé en ce que** le dispositif (108) de surveillance de l'état de fonctionnement est configuré pour :
* sélectionner des valeurs de mesure pour au moins une grandeur de mesure à partir d'au moins deux mesures sur une ou plusieurs pièces ouvrées (104),
* déterminer au moins un indice de dispersion pour les valeurs de mesure sélectionnées de l'au moins une grandeur de mesure,
* déterminer au moins un indice de dispersion de référence pour des valeurs de mesure de l'au moins une grandeur de mesure, et
* déterminer l'état de fonctionnement de l'équipement (106) par comparaison de l'au moins un indice de dispersion déterminé avec l'au moins un indice de dispersion de référence pour l'au moins une grandeur de mesure,
l'indice de dispersion présentant une information à propos d'une distribution des valeurs de mesure.

15. Produit de programme informatique comprenant des instructions exécutables par un ordinateur qui, exécutées sur un ordinateur, amènent l'ordinateur à mettre en œuvre le procédé selon l'une des revendications 1 à 13.
